# EUROPÄISCHE PATENTANMELDUNG

(11) **EP 1 093 176 A2**
(43) Veröffentlichungstag der Anmeldung: **18.04.2001**
(21) Anmeldenummer: 00122207.4
(22) Anmeldetag: 13.10.2000
(51) Int. Cl.: H01M 8/08, H01M 4/86, H01M 8/04

(54) **Brennstoffzelle**

(30) Priorität: 13.10.1999 DE 19949347
(71) Anmelder: BASF AKTIENGESELLSCHAFT, 67056 Ludwigshafen (DE)
(72) Erfinder: Pütter, Hermann, Dr., 67433 Neustadt (DE); Fischer, Andreas, Dr., 67067 Ludwigshafen (DE)
(74) Vertreter: Isenbruck, Günter, Dr.

(57) **Zusammenfassung**

Die vorliegende Erfindung betrifft eine Brennstoffzelle, die mindestens die folgenden Elemente aufweist:
c) zwei Elektroden, die jeweils mit mindestens einer Gasführung für ein Reaktionsgas versehen sind,
d) ein flüssiger Elektrolyt,
wobei die jeweiligen Gasführungen der Elektroden jeweils mindestens einen Einlaß aufweisen und senkrecht zu der unter Last durch die Anordnung der Elektroden vorgegebenen Wanderungsrichtung der Ionen verlaufen.

## Beschreibung

Die vorliegende Erfindung betrifft eine Brennstoffzelle, insbesondere eine ungeteilte Brennstoffzelle mit elektrolytgefüllten Elektroden.

Brennstoffzellen sind Energiewandler, die chemische Energie in elektrische Energie umwandeln. In einer Brennstoffzelle wird das Prinzip der Elektrolyse umgekehrt.

Man kennt heute verschiedene Arten von Brennstoffzellen, die sich i.a. in der Betriebstemperatur voneinander unterscheiden. Der Aufbau der Zellen ist aber prinzipiell bei allen Typen gleich. Sie bestehen i.a. aus zwei Elektroden, einer Anode und einer Kathode, an der die Reaktionen ablaufen, und einem Elektrolyten zwischen den beiden Elektroden. Dieser hat drei Funktionen. Er stellt den ionischen Kontakt her, verhindert den elektrischen Kontakt und sorgt außerdem für die Trennung der den Elektroden zugeführten Gase. Die Elektroden werden in der Regel mit Gasen versorgt, die im Rahmen einer Redoxreaktion umgesetzt werden. Beispielsweise wird die Anode mit Wasserstoff und die Kathode mit Sauerstoff versorgt. Um dies zu gewährleisten, sind die Elektroden mit elektrisch leitenden Gasverteilereinrichtungen kontaktiert. Dies sind im allgemeinen Platten mit einer gitterartigen Oberflächenstruktur, bestehend aus einem System feiner Kanäle. Eine Ausnahme bildet die sogenannte Direktmethanolbrennstoffzelle; hier ist der Brennstoff nicht gasförmig, sondern eine wäßrige Lösung von Methanol. Die Gesamtreaktion läßt sich in allen Brennstoffzellen in einen anodischen und einen kathodischen Teilschritt zerlegen. Hinsichtlich der Betriebstemperatur, dem eingesetzten Elektrolyten und den möglichen Brenngasen gibt es Unterschiede zwischen den verschiedenen Zellentypen.

Grundsätzlich unterscheidet man zwischen Niedertemperatur-Brennstoffzellen und Hochtemperatursystemen. Die Niedertemperatur-Brennstoffzellen zeichnen sich im allgemeinen durch einen sehr hohen elektrischen Wirkungsgrad aus. Allerdings ist ihre Abwärme wegen des geringen Temperaturniveaus nur schlecht zu nutzen. Insofern sind diese Brennstoffzellen nur für die Nahwärmenutzung nutzbar, nicht aber für nachgeschaltete Energiewandlungsprozesse. Niedertemperatur-Brennstoffzellen sind von daher für den mobilen Einsatz und eine dezentrale Anwendung kleiner Leistung sinnvoll. Bei den Hochtemperatursystemen hingegen können Kraftwerkstufen nachgeschaltet werden, um aus der Abwärme elektrische Energie zu gewinnen oder sie als Prozeßwärme zu nutzen.

Der heutige Stand der Technik bei Brennstoffzellen ist durch folgende technisch relevante Typen gekennzeichnet:
AFC (alkaline fuel cells)
PEFC (polymer electrolyte fuel cell)
PAFC (phosphoric acid fuel cell)
MCFC (molten carbonate fuel cell)
SOFC (solid oxide fuel cell)

Insbesondere die Polymerelektrolytbrennstoffzelle und die phosphorsaure Brennstoffzelle haben sowohl für stationäre Anwendungen als auch für mobile Einsatzzwecke derzeit großes Interesse gefunden und stehen vor einer breiten Kommerzialisierung. Demgegenüber werden bzw. wurden die anderen Typen bisher nur in wenigen Demonstrationsanlagen oder für spezielle Einsatzzwecke, z. B. im Raumfahrtbereich oder für militärische Zwecke betrieben.

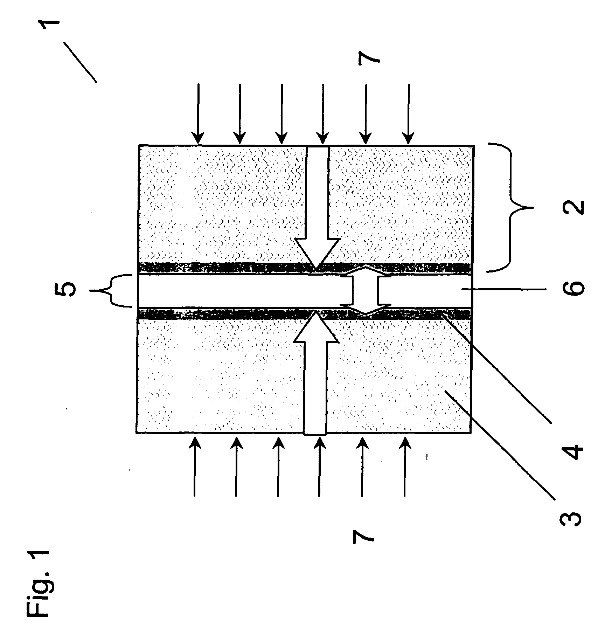

Nach dem heutigen Stand der Technik weisen alle Brennstoffzellen gasdurchlässige, poröse Elektroden, sogenannte dreidimensionale Elektroden, auf. Diese Elektroden werden unter dem Sammelbegriff Gasdiffusionselektroden (GDE) geführt. Durch diese Elektroden hindurch werden die jeweiligen Reaktionsgase bis nahe an den Elektrolyten geführt (s. Figur 1). Der bei allen Brennstoffzellen vorhandene Elektrolyt stellt den ionischen Stromtransport in der Brennstoffzelle sicher. Er hat zudem die Aufgabe, eine gasdichte Barriere zwischen den beiden Elektroden zu bilden. Darüber hinaus garantiert und unterstützt der Elektrolyt eine stabile Dreiphasenschicht, in welcher die elektrolytische Reaktion stattfinden kann.

In alkalischen Brennstoffzellen kann der Elektrolyt eine Flüssigkeit sein. In der phosphorsauren Brennstoffzelle und in der Molten Carbonate-Brennstoffzelle bilden hingegen anorganische, inerte Träger zusammen mit dem Elektrolyten eine ionenleitende und gasdichte Matrix. Bei der Solid Oxide Fuel Cell dient im allgemeinen ein Hochtemperatursauerstoffionenleiter als Elektrolyt und gleichzeitig als Membran. Die Polymerelektrolyt-Brennstoffzelle setzt organische Ionenaustauschermembranen, in den technisch realisierten Fällen perfluorierte Kationenaustauschermembranen als Elektrolyte ein.

Die Struktur der Elektroden und die Art des Elektrolyten bedingen die Dreiphasengrenzschicht. Umgekehrt führt die Ausführung der Trennphase für jeden dieser Zelltypen zu spezifischen Anforderungen an die Gasdiffusionselektrode und den Elektrolyten. Dies führt zu Einschränkungen hinsichtlich der Stromdichte, Temperaturführung, Verwendbarkeit von Trägermaterialien, Katalysatoren und Hilfsmitteln. Auch die Abdichtung der getrennt zu haltenden Gasräume an Anode und Kathode führt zu hohen konstruktiven und damit auch zu hohen finanziellen und technischen Aufwendungen.

Gemäß dem Konzept aller heutigen Brennstoffzellen werden die Reaktionsgase über ein Gasverteilersystem von der Rückseite der Elektrode, d.h. der jeweils von der Gegenelektrode abgewandten Seite, der elektrochemisch aktiven Zone zugeführt. Unter Last erfolgt sowohl der Gastransport als auch die Ionenmigration senkrecht zur vorgegebenen Elektrodengeometrie, wobei die Ionen zwischen den Elektroden wandern, und die Gase rückseitig zu den Elektroden wandern. Insgesamt verlaufen somit Gastransport und Ionentransport parallel (s. Figur 1). Das hat zur Folge, daß ein guter Gastransport an die Grenze zwischen beiden Elektroden an dieser Grenze zu einer Durchmischung der Reaktionsgase fuhren würde, wenn dies nicht durch speziell dafür vorgesehene Trennmedien oder, wie bei einigen AFCs, durch definierte Beströmung der Elektroden mit Elektrolyt verhindert wird. Eine Durchmischung der Reaktionsgase muß aus Sicherheitsgründen verhindert werden. Außerdem würde ein Gasübertritt zur Mischpotentialbildung an der jeweiligen Elektrode führen. Dies hätte eine deutliche Leistungsminderung zur Folge. Durch den Aufwand für geeignete Transport- und Trennmaßnahmen wird allerdings die Wirtschaftlichkeit und der Wirkungsgrad heutiger Brennstoffzellen erheblich begrenzt. Zudem wird durch dieses Arbeitsprinzip heutiger Brennstoffzellen die Wasserbilanz und der Wärmehaushalt der Zelle erschwert. Im Falle einer PEFC muß beispielsweise einerseits das sich bildende Wasser aus der Zelle abgeführt werden, damit die Gasdiffusionselektroden nicht 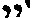 ertrinken", andererseits muß das System ausreichend feucht gehalten werden, um die Leitfähigkeit der Membranen zu gewährleisten. Darüber hinaus ist aufgrund der thermisch wenig belastbaren Materialien, insbesondere der Ionenaustauschermembran, die Wärmeabfuhr ebenfalls ein entscheidendes Kriterium für den Langzeitwirkungsgrad der Zellen.

Aufgabe der vorliegenden Erfindung ist es nun, eine Brennstoffzelle bereitzustellen, bei der die dem beschriebenen Arbeitsprinzip heutiger Brennstoffzellen innewohnenden Nachteile vermieden werden.

Diese Aufgabe wird erfindungsgemäß durch eine Brennstoffzelle gelöst, die mindestens die folgenden Elemente aufweist:
a) zwei Elektroden, die jeweils mit mindestens einer Gasführung für ein Reaktionsgas versehen sind,
b) ein flüssiger Elektrolyt,
wobei die jeweiligen Gasführungen der Elektroden mindestens einen Einlaß aufweisen und senkrecht zu der unter Last durch die Anordnung der Elektroden vorgegebenen Wanderungsrichtung der Ionen verlaufen.

Dabei wird im Rahmen der vorliegenden Erfindung unter 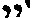 senkrecht" ein Winkel zwischen Gasführung und der Wanderungsrichtung der Ionen verstanden, der in einem Bereich von 90° ± 45°, vorzugsweise von 90° ± 20° und besonders bevorzugt von 90° ± 10° liegt.

Dadurch, daß erfindungsgemäß die Reaktionsgase senkrecht zu den Ionen geführt werden, wird an der Grenze zwischen den zwei Elektroden eine Durchmischung der Reaktionsgase vermieden, ohne daß entsprechende Trennmedien oder, wie bei AFCs, eine entsprechende Beströmung der Elektroden mit Elektrolyt vorgesehen sein müssen. Dadurch sind die Wirtschaftlichkeit und der Wirkungsgrad der erfindungsgemäßen Brennstoffzellen gegenüber den bisher bekannten Brennstoffzellen erheblich verbessert. Man benötigt somit keine Membran mehr, um die Reaktionsgase voneinander zu trennen.

In einer weiteren bevorzugten Ausführungsform der Erfindung handelt es sich bei den zwei Elektroden um elektrolytgefüllte Elektroden, bzw. um elektrolytbefüllbare Elektroden. Somit sind die jeweiligen elektrochemisch aktiven Zonen nicht auf die jeweiligen Oberflächen der zwei Elektroden, bzw. auf entsprechende Bereiche zwischen den zwei Elektroden beschränkt, sondern können je nach Ausführung der Gasführungen innerhalb der jeweiligen Elektroden einen wesentlich größeren Raum einnehmen. Damit sind die erfindungsgemäßen Brennstoffzellen wesentlich wirtschaftlicher als bisherige Zellen, die räumlich nur sehr begrenzte elektrochemisch aktive Zonen aufwiesen. Ferner ist der Einsatz von Gasdiffusionselektroden, d.h. von porösen, gasdurchlässigen Grundkörpern, die den Gastransport zur elektrochemisch aktiven Schicht herbeiführen, nicht mehr nötig. Die bislang verwendeten Gasdiffusionselektroden sind komplexe Mehrkomponentensysteme mit eingestellter Hydrophilie bzw. Hydrophobie, Porosität, Katalysatorbeladung oder Leitfähigkeit. Sie sind sehr kostspielig und chemisch teilweise auch instabil. Auch der möglich gewordene Verzicht auf Membrane reduziert die Kosten erheblich. Zudem entfallen bei der erfindungsgemäßen Ausführungsform Potentialverluste, die bislang sowohl in den Gasdiffusionselektroden wie auch in den unabdingbaren Membranen oder anderen Trennmedien auftraten. Dadurch erhöht sich die Energieausbeute und damit der Gesamtwirkungsgrad der erfindungsgemäßen Brennstoffzelle gegenüber dem Stand der Technik.

In einer bevorzugten Ausführungsform der Erfindung handelt es sich bei der Brennstoffzelle somit um eine ungeteilte Zelle, da bei Anwendung des erfindungsgemäßen Prinzips eine Trennung der Elektrodenräume nicht mehr zwingend notwendig ist und die Reaktionsgase nicht mehr Gefahr laufen, sich miteinander unkontrolliert zu vermischen. Insofern ist eine geteilte Zelle aus Sicherheitsgründen nicht mehr erforderlich.

In einer anderen erfindungsgemäßen Ausführungsform der Erfindung weist die Brennstoffzelle ein Verteilersystem zur Zufuhr jeweils mindestens eines Reaktionsgases in die jeweils mindestens eine Gasführung der zwei Elektroden auf. Vorzugsweise werden hier prinzipiell bekannte Strukturen verwendet. Besonders bevorzugt werden Mikromixer eingesetzt *[V. Hessel, W. Ehrfeld, K. Golbig, V. Haverkamp, H. Löwe, T. Richter, Proceedings of the 2*^{*nd*} *International Conference On Microreaction Technology, New Orleans, 1998]*. Das Verteilersystem ist erfindungsgemäß so konzipiert, daß ein gleichmäßiger, feiner Strom von Gasblasen in den Elektroden hochsteigt. Damit erhöht sich die Stromdichte des Systems. Vorzugsweise werden als Reaktionsgase Sauerstoff und Wasserstoff eingesetzt. Es ist jedoch auch denkbar, hier Methanol oder Methan einzusetzen. In einer anderen bevorzugten Ausführungsform der Erfindung werden die Reaktionsgase mit mindestens einem geeigneten Inertgas verdünnt. Vorzugsweise wird hier Stickstoff verwendet. Es ist auch denkbar, CO₂ als Inertgas einzusetzen. Die vorzugsweise mit mindestens einem Inertgas verdünnten Reaktionsgase werden über das erfindungsgemäße Verteilersystem vorzugsweise von unten in die Brennstoffzellkammer eingespeist und den entsprechenden Gasführungen innerhalb der jeweiligen Elektroden zugeführt, so daß sie senkrecht zu den Ionen geführt werden. Das bedeutet beispielsweise, daß die Reaktionsgase parallel zu dem Spalt entlangströmen, der sich zwischen den beiden Elektroden, d.h. zwischen Anode und Kathode befindet.

In einer bevorzugten Ausführungsform der Erfindung sind die mindestens zwei Elektroden mit dem mindestens einen Elektrolyt befüllbar.

In der vorliegenden Erfindung ist der eingesetzte Elektrolyt eine ionenleitende Flüssigkeit. Vorzugsweise wird hierbei eine wässrige Alkalihydroxidlösung oder eine wässrige Mineralsäurelösung, wie beispielsweise Schwefelsäure, Phosphorsäure, oder Halogenwasserstoffsäure eingesetzt. In einer anderen bevorzugten Ausführungsform der Erfindung wird ein organischer Elektrolyt eingesetzt. Vorzugsweise werden hier Tetraalkylammoniumhydroxide oder -salze, Sulfonsäuren oder Phosphonsäuren verwendet. Aber auch alle anderen geeigneten Elektrolyte können eingesetzt werden.

In einer bevorzugten Ausführungsform der Erfindung wird als Lösemittel Wasser eingesetzt. In einer anderen bevorzugten Ausführungsform werden mit Wasser mischbare Lösemittel, wie beispielsweise Carbonsäuren, Alkohole, Carbonsäureamide und/oder substituierte Harnstoffe eingesetzt. In einer weiteren bevorzugten Ausführungsform der Erfindung finden flüssige und/oder schmelzflüssige Salze, wie beispielsweise Tetraalkylammoniumsalz, 1.3-Dialkylimidazoliumsalze und/oder Tetrachloraluminate, wie beispielsweise NaAlCl₄, Anwendung.

Im Rahmen der vorliegenden Erfindung können die jeweiligen Gasführungen der Elektroden sowohl parallel als auch antiparallel, d.h. 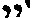 im Gegenstrom", zueinander verlaufen.

In einer weiteren bevorzugten Ausführungsform der Erfindung sind die zwei Elektroden nicht stehend angeordnet, sondern weisen einen beliebigen Neigungswinkel auf, und können sogar horizontal liegend angeordnet sein. Somit kann die Brennstoffzelle entsprechend den an sie gestellten Anforderungen gestaltet werden. Sie läßt sich sehr kompakt und somit platzsparend gestalten.

Der zwischen den mindestens zwei Elektroden befindliche Spalt hat vorzugsweise eine planare Geometrie. In einer anderen bevorzugten Ausführungsform der Erfindung kann der Spalt jedoch auch eine andere Geometrie als planar besitzen, z. B. sind die mindestens zwei Elektroden so zueinander angeordnet, daß ein Ringspalt entsteht.

Vorzugsweise weisen die Elektroden neben einem Einlaß für die jeweiligen Gasführungen auch mindestens einen entsprechenden Auslaß auf.

In einer weiteren bevorzugten Ausführungsform der Erfindung ist die Breite der Elektroden vom Einlaß der jeweiligen Gasführungen zum Auslaß der entsprechenden Gasführungen unterschiedlich. Vorzugsweise ist der Einlaß breiter als der entsprechende Auslaß, da der Einlaß von einer hohen Gasmenge passiert wird, während der Auslaß infolge von Verbrauch von einer geringeren Gasmenge passiert wird. Beispielsweise bildet so das Ensemble Elektrode/Spalt einen Pyramidenstumpf, einen Kegelstumpf oder es ist beispielsweise mit dem Querschnitt eines Trapezes versehen. Aber auch andere geometrische Anordnungen sind denkbar.

In einer weiteren bevorzugten Ausführungsform der Erfindung besteht mindestens eine der mindestens zwei Elektroden aus mehreren Einzelkomponenten. In einer bevorzugten Ausführungsform der Erfindung besteht sie aus mehreren parallel angeordneten, zu einer lamellenartigen Struktur zusammengefügten Platten. In den dadurch entstehenden Zwischenräumen wird das Gas parallel zu den Außenkanten von einer Stirnseite zur gegenüberliegenden Stirnseite geführt. Das Verteilersystem liefert Gasblasen und nimmt Restgase wieder auf. Innerhalb des umgewälzten Elektrolytsystems verbleiben die Gasblasen in der Elektrode.

Aus der DE 41 20 679 sind derartige Elektroden bekannt. Man spricht dort von sogenannten Kapillarspaltelektroden. Im Gegensatz zur vorliegenden Erfindung wird aber auch hier das Gas von der Rückseite der Elektrode dem System zugeführt, der Ionen- und Gastransport verlaufen somit parallel zueinander, wodurch die eingangs genannten Nachteile auch bei Verwendung dieser Kapillarspaltelektroden gegeben sind. In der DE 41 19 836 wird zudem ausdrücklich darauf hingewiesen, daß der Gastransport im 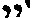 Randbereich" gegenüber dem Innern der jeweiligen Elektrode erleichtert ist und nicht etwa umgekehrt. Deshalb wird auch hier eine geteilte Brennstoffzelle zwingend vorausgesetzt. Eine bevorzugte Ausführungsform der vorliegenden Erfindung zeichnet sich demgegenüber dadurch aus, daß der Elektrolytraum zwischen zwei Elektrodenlamellen so strukturiert ist, daß ein Gastransport senkrecht zum Ionentransport stattfindet.

In einer bevorzugten Ausführungsform der Erfindung wird dabei die Oberfläche der Elektroden durch Kanäle strukturiert, wobei die Kanäle gleichsinnig zu der mindestens einen Gasführung verlaufen. Das Profil der Kanäle kann halbrund, rechteckig, dreieckig oder von beliebig anderer Form sein. Die Kanäle werden vorzugsweise durch Ausfräsen, Ätzen und/oder andere Techniken aus massivem Elektrodenmaterial herausgearbeitet. In einer anderen bevorzugten Ausführungsform der Erfindung werden die Kanäle durch entsprechende Wellung von Blechen oder Netzen erzeugt. In einer noch anderen bevorzugten Ausführungsform der Erfindung werden die Kanäle durch galvanische Techniken erzeugt, bei denen das gewünschte Metall und/oder eine Legierung davon auf ein Substrat, das entsprechend durch Templates geschützt ist, abgeschieden werden. Darüber hinaus sind auch andere Strukturen denkbar, so beispielsweise geschlitzte Rohre, Drahtbündel oder gebohrte poröse Metallkörper oder eine geeignete kombinierte Anordnung dieser Strukturen.

Ein besonderer Vorteil der erfindungsgemäßen Brennstoffzelle besteht darin, daß sie neue Freiheitsgrade in bezug auf die elektrokatalytisch wirksame Elektrodenoberfläche bereitstellt. Da die einzelnen Teilelektroden, d.h. die einzelnen Lamellen, vor dem Zusammenbau zur Gesamtelektrode beliebig bearbeitbar sind, können sie so auch in geeigneter Weise mit Katalysatoren aktiviert werden. Die geschieht durch Beschichtung mit elektrokatalytisch wirksamen Materialien, beispielsweise mit Edelmetallen wie Platin, Palladium, Silber, Ruthenium oder Iridium oder Kombinationen von diesen. Dies kann insbesondere durch galvanische Beschichtungen oder stromlose Metallabscheidungen erfolgen. Eine besonders vorteilhafte Verfahrensweise ist beispielsweise in der DE 199 15 681.6 beschrieben.

In einer weiteren bevorzugten Ausführungsform der Erfindung weist die Brennstoffzelle mindestens noch einen Spacer auf, der derart angeordnet ist, daß er mit den Elektroden funktionell zusammenwirkt. Innerhalb der Brennstoffzelle werden die Elektroden mit Spacern kombiniert, wobei dabei aus mehreren Einzelteilen zusammengesetzte Elektroden verwendet werden. Besonders bevorzugt bestehen die Elektroden aus parallel angeordneten Platten, die zu einer lamellenartigen Struktur zusammengefügt sind. Die einzelnen elektrisch leitenden Lamellen werden durch Spacer soweit auf Abstand gehalten, daß die Gasführung innerhalb der Elektroden gewährleistet ist. Erfindungsgemäß weist ein derartiger Spacer mindestens die folgenden Bestandteile auf:
a) einen Abstandshalter,
b) ein Fenster,
c) eine Gassperre.

Der Abstandshalter definiert und sichert den Abstand der einzelnen Lamellen. Das Fenster stellt den ungehinderten Gas- und Elektrolytstrom zwischen den Lamellen einer Elektrode sicher. Die Gassperre besteht aus einem Steg zwischen den Fenstern von Anode und Kathode und verhindert den Übertritt von Gasblasen in den Bereich der jeweiligen Gegenelektrode. Der Steg kann dabei verschiedenartig ausgebildet sein. Beispielsweise kann er eine gewellte oder gefaltete Struktur haben. In einer besonders bevorzugten Ausführungsform der Erfindung ist der Steg mit weiteren Abstandshaltern versehen, wodurch die gesamte Elektroden/Spacer-Einheit nochmals in seiner funktionellen Struktur stabilisiert wird.

Weitere Vorteile und Anwendungsmöglichkeiten werden anhand der Beschreibung der folgenden Ausführungsformen einer erfindungsgemäßen Brennstoffzelle in Zusammenhang mit den Figuren aufgezeigt. Es zeigen:
- Figur 1: Schematische Darstellung des Aufbaus einer Brennstoffzelle gemäß dem Stand der Technik;
- Figur 2: Schematische Darstellung des Aufbaus einer Ausführungsform einer erfindungsgemäßen Brennstoffzelle, in Frontansicht (Figur 2a) und von schräg oben (Figur 2b);
- Figur 3: Schematische Darstellung einer weiteren erfindungsgemäßen Brennstoffzelle;
- Figur 4: Schematische Darstellung verschiedener Ausgestaltungsmöglichkeiten eines Spacers einer Ausführungsform einer erfindungsgemäßen Brennstoffzelle.

In Figur 1 ist eine schematische Darstellung einer Brennstoffzelle 1 nach dem heutigen Stand der Technik gezeigt. Im allgemeinen besteht eine derartige Brennstoffzelle 1 aus zwei sich gegenüberstehenden gasdurchlässigen, porösen Elektroden 2, die unter dem Begriff Gasdiffusionselektroden (GDE) bekannt sind. Sie umfassen ein poröses, elektrisch leitendes Substrat 3 und eine elektrokatalytische Schicht 4. Innerhalb des vorgesehenen Spaltes 5 zwischen den Elektroden 2 befindet sich eine Membran 6. Diese Membran 6 beinhaltet gleichzeitig den Elektrolyten. Der Elektrolyt stellt den ionischen Stromtransport in der Brennstoffzelle sicher. Er bildet eine gasdichte Barriere zwischen den beiden Elektroden 2 und garantiert somit eine elektrochemisch aktive Zone, innerhalb welcher die Elektrolyse stattfinden kann. Der Elektrolyt kann eine Flüssigkeit sein. In einer phosphorsauren Brennstoffzelle und in der Molten Carbonate Brennstoffzelle bilden anorganische, inerte Träger zusammen mit dem Elektrolyten eine ionenleitende und gasdichte Matrix. Bei der Solid Oxide Fuel Cell dient im allgemeinen ein Hochtemperatursauerstoffionenleiter als Membran. Die Polymerelektrolyt-Brennstoffzelle setzt organische Ionenaustauschermembranen, beispielsweise perfluorierte Kationenaustauschermembranen ein. Der innige Kontakt zwischen der Membran und den Gasdiffusionselektroden wird durch aufwendige Techniken, z. B. durch 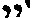 Hot-Pressing" und weitere Teilschritte erreicht. Die Reaktionsgase 7 werden über Gasverteilersysteme von der Rückseite der Elektrode 2, d.h. der jeweils von der Gegenelektrode abgewandten Seite, der elektrochemisch aktiven Zone zugeführt. Somit laufen Gastransport (dicke, einsinnige Pfeile) und Ionentransport (dicker Doppelpfeil) insgesamt parallel.

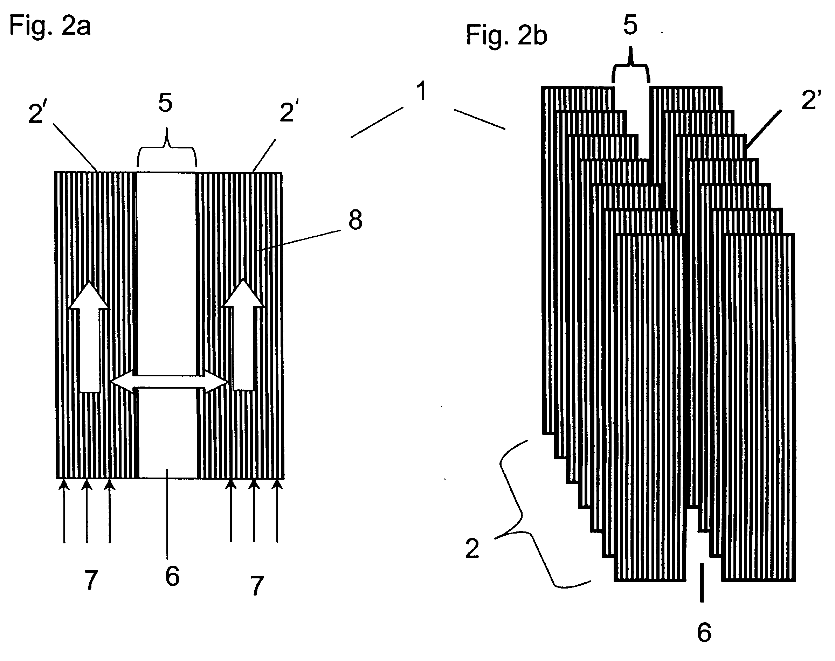

Figur 2a ist eine schematische Darstellung einer erfindungsgemäßen Brennstoffzelle 1, wobei sie zwei Elektrodensegmente 2 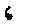 und den dazwischenliegenden Spalt 5 zeigt. Es handelt sich hier um eine ungeteilte Brennstoffzelle, d.h. es ist keine Membran oder eine sonstige Trenneinrichtung vorhanden, um den Anodenraum von dem Kathodenraum abzutrennen. Die Elektrodensegmente 2 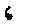 sind mit einem Elektrolyten 6, der sich auch in dem Spalt bzw. dem Zwischenraum 5 zwischen den Elektrodensegmenten 2 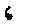 befindet, gefüllt. Der Elektrolyt 6 ist eine ionenleitende Flüssigkeit, beispielsweise eine wässrige Alkalihydroxidlösung, eine wässrige Mineralsäurelösung, wie Schwefelsäure, Phosphorsäure oder Halogenwasserstoffsäure. Organische Elektrolyte, wie beispielsweise Tetraalkylammoniumhydroxide oder -salze, Sulfonsäuren oder Phosphonsäuren sind ebenfalls verwendbar. Innerhalb der jeweiligen Elektrodensegmente 2 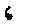 sind Gasführungen 8 vorgesehen, die parallel zum Spalt 5 zwischen den Elektrodensegmenten 2 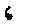 verlaufen, so daß der Gastransport senkrecht zum Ionentransport erfolgt. Dadurch wird eine unkontrollierte Vermischung der Reaktionsgase verhindert. Jedes der Elektrodensegmente 2 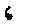 ist mit einer Gasversorgung 7 versehen, über welche die jeweiligen Reaktionsgase, vorzugsweise Wasserstoff bzw. Sauerstoff, vorzugsweise verdünnt mit Inertgasen, wie beispielsweise Stickstoff, eingespeist werden.

Während Figur 2a einen Querschnitt einer Ausführungsform der erfindungsgemäßen Brennstoffzelle 1 wiedergibt, ist in Figur 2b eine Aufsicht von schräg oben gezeigt. Man erkennt, daß eine Elektrode 2 aus mehreren gleichartigen Elektrodensegmenten 2 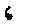 zusammengesetzt ist und daß zwei derartige Elektroden 2 wiederum zu einem Gesamtsystem, d.h. der Brennstoffzelle 1 zusammengefaßt werden. Hierbei kann beispielsweise jedes zweite Segment spiegelbildlich zu jedem Nachbarsegment sein. Die Elektrodensegmente 2' können beidseitig oder nur einseitig mit Kanälen ausgestattet sein. Es kann aber auch bei jedem zweiten Elektrodensegment auf eine Kanalstruktur verzichtet werden, wenn die Ausprägung der anderen Elektrodensegmente dies erfordert oder ermöglicht.

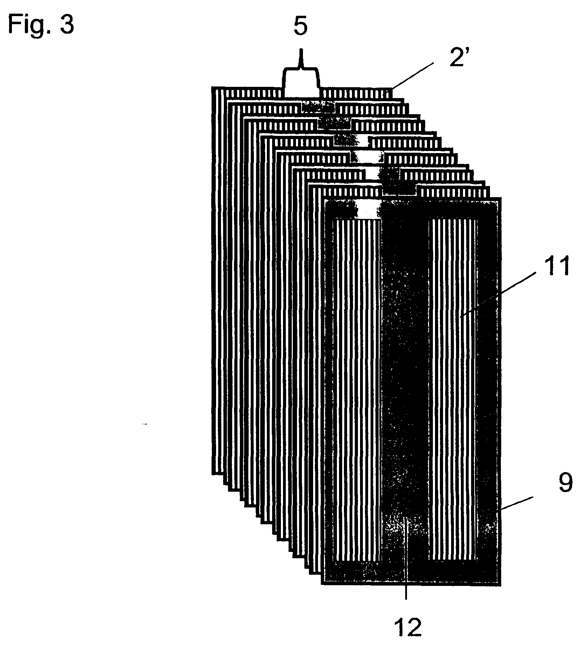

In Figur 3 ist eine weitere Ausführungsform einer erfindungsgemäßen Brennstoffzelle 1 schematisch in einer Aufsicht von schräg oben dargestellt. Die Elektroden 2 setzen sich aus mehreren Einzelkomponenten, den Elektrodensegmenten 2', zusammen. Die Elektrodensegmente 2' bestehen hier aus parallel angeordneten Platten, die zu einer lamellenartigen Struktur zusammengefügt sind. Die einzelnen elektrisch leitenden Platten werden durch Spacer 9 soweit auf Abstand gehalten, daß die Gasführung gewährleistet ist.

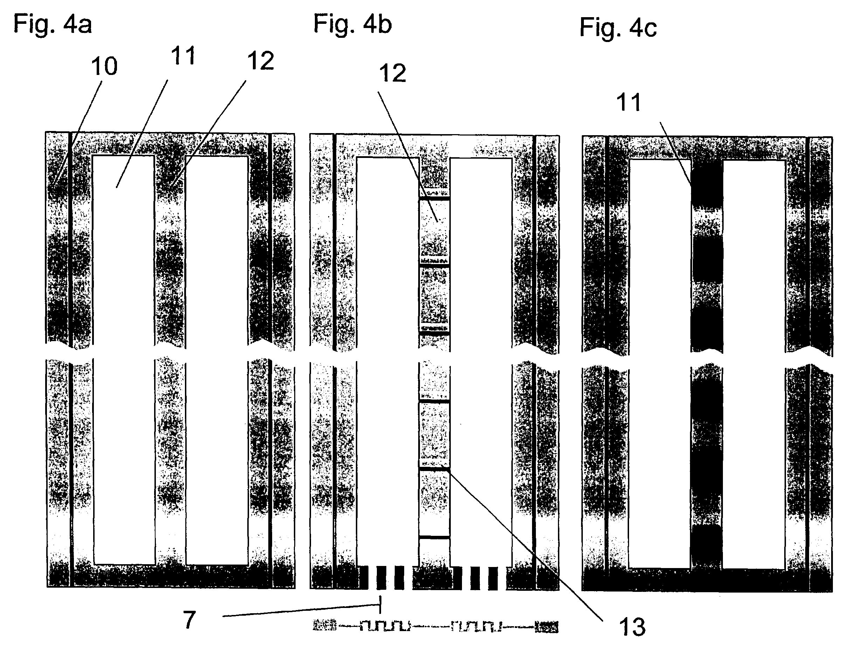

Figur 4 zeigt verschiedene Möglichkeiten der Ausgestaltung des Spacers 9 in bevorzugten Ausführungsformen der erfindungsgemäßen Brennstoffzelle 1. Der Spacer 9 besteht aus drei Arten von funktionellen Bauteilen, nämlich einem Abstandshalter 10, einem Fenster 11 und einer Gassperre 12. Der Abstandshalter 10 definiert und sichert den Abstand der einzelnen Platten. Das Fenster 11 stellt den ungehinderten Gas- und Elektrolytstrom zwischen den Platten einer Elektrode 2 sicher. Die Gassperre 12 besteht aus einem Steg zwischen den Fenstern 11 von Anode und Kathode und verhindert den Übertritt von Gasblasen in den Bereich der jeweiligen Gegenelektrode. Der Steg 12 kann dabei planar sein (s. Figur 4a), oder er kann gewellt oder gefaltet sein (s. Figur 4c), oder er kann mit Distanzhaltern 13 versehen sein (s. Figur 4b), um somit mehrere Stege untereinander fixieren zu können. In der bevorzugten Ausführungsform, die in Figur 4b dargestellt ist, ist die Gaszuleitung 7 in den Spacer 9 integriert.

## Patentansprüche

1. Brennstoffzelle, die mindestens die folgenden Elemente aufweist:
a) zwei Elektroden, die jeweils mit mindestens einer Gasführung für ein Reaktionsgas versehen sind,
b) ein flüssiger Elektrolyt,
wobei die jeweiligen Gasführungen der Elektroden jeweils mindestens einen Einlaß aufweisen und senkrecht zu der unter Last durch die Anordnung der Elektroden vorgegebenen Wanderungsrichtung der Ionen verlaufen.

2. Brennstoffzelle nach Anspruch 1, dadurch gekennzeichnet, daß die Brennstoffzelle eine ungeteilte Zelle ist.

3. Brennstoffzelle nach einem der Ansprüche 1 oder 2, dadurch gekennzeichnet, daß die Gasführungen der Elektroden jeweils mindestens einen Auslaß aufweisen.

4. Brennstoffzelle nach einem der Ansprüche 1 bis 3, dadurch gekennzeichnet, daß die mindestens zwei Elektroden mit dem mindestens einen Elektrolyt befüllbar sind.

5. Brennstoffzelle nach einem der Ansprüche 1 bis 4, dadurch gekennzeichnet, daß die Brennstoffzelle ein Verteilersystem zur Zufuhr jeweils mindestens eines Reaktionsgases in die jeweils mindestens eine Gasführung der zwei Elektroden aufweist.

6. Brennstoffzelle, nach einem der Ansprüche 1 bis 5, dadurch gekennzeichnet, daß die Reaktionsgase mit mindestens einem Inertgas verdünnt sind.

7. Brennstoffzelle nach einem der Ansprüche 1 bis 6, dadurch gekennzeichnet, daß die jeweiligen Gasführungen der zwei Elektroden antiparallel zueinander verlaufen.

8. Brennstoffzelle nach einem der Ansprüche 1 bis 6, dadurch gekennzeichnet, daß die jeweiligen Gasführungen der zwei Elektroden parallel zueinander verlaufen.

9. Brennstoffzelle nach einem der Ansprüche 1 bis 8, dadurch gekennzeichnet, daß mindestens eine der zwei Elektroden aus mehreren Einzelkomponenten besteht, vorzugsweise aus mehreren parallel angeordneten, zu einer lamellenartigen Struktur zusammengefügten Platten.

10. Brennstoffzelle nach einem der Ansprüche 1 bis 8, dadurch gekennzeichnet, daß mindestens eine der zwei Elektroden mindestens einen, vorzugsweise mehrere Kanäle aufweist, die gleichsinnig zu der mindestens einen Gasführung der Elektrode verlaufen.

11. Brennstoffzelle nach einem der Ansprüche 1 bis 10, dadurch gekennzeichnet, daß die Brennstoffzelle mindestens noch einen Spacer aufweist, der derart angeordnet ist, daß er mit den Elektroden funktionell zusammenwirkt.
